# EUROPÄISCHE PATENTANMELDUNG

(11) **EP 4 692 612 A1**
(43) Veröffentlichungstag der Anmeldung: **11.02.2026**
(21) Anmeldenummer: 24193395.1
(22) Anmeldetag: 07.08.2024
(51) Int. Cl.: F16K 11/078, F16K 11/00, F16K 27/04, F16K 31/60

(54) **HEBELBETÄTIGTES FLUIDSTEUERVENTIL, INSBESONDERE SANITÄRES EINHEBELVENTIL**

(71) Anmelder: Hansgrohe SE, 77761 Schiltach (DE)
(72) Erfinder: Hahn, Arno, 77761 Schiltach (DE); King, Jürgen, 78730 Lauterbach (DE)
(74) Vertreter: Patentanwälte Ruff, Wilhelm, Beier, Dauster & Partner mbB

(57) **Zusammenfassung**

1. Hebelbetätigtes Fluidsteuerventil, insbesondere sanitäres Einhebelventil.
2.1. Die Erfindung bezieht sich auf ein hebelbetätigtes Fluidsteuerventil, das einen Ventilgrundkörper (1) und einen Betätigungshebel (5) umfasst, der durch eine Lagerung beweglich am Ventilgrundkörper gehalten ist. Der Ventilgrundkörper weist ein Ventilgehäuse (2), einen darin beweglich angeordneten Ventilkörper (3) und eine Lagerzapfenaufnahmestruktur (4) auf. Die Lagerung weist eine in der Lagerzapfenaufnahmestruktur aufgenommene Lagerzapfenstruktur (6) mit einem seitlich vom Betätigungshebel abstehenden Lagerzapfen (6₁) oder zwei auf gegenüberliegenden Seiten vom Betätigungshebel abstehenden Lagerzapfen (6₁, 6₂) auf.
2.2. Erfindungsgemäß weist die Lagerzapfenaufnahme für den jeweiligen Lagerzapfen eine ihn über mehr als seinen halben Umfang umschließende, umfangsseitig offene Zapfenaufnahmeöffnung (7₁, 7₂) und einen Zapfeneinführschlitz (8₁, 8₂) auf, der zu einer Außenseite des Ventilgrundkörpers hin offen ist und in einer Einführrichtung (ER) unter Bildung einer Schnappverbindung radial in die Zapfenaufnahmeöffnung mündet.
2.3. Verwendung z.B. als Einhebel-Mischventile in Sanitärarmaturen.
3. Fig. 3..

## Beschreibung

Die Erfindung bezieht sich auf ein hebelbetätigtes Fluidsteuerventil nach dem Oberbegriff des Anspruchs 1.

Demgemäß umfasst das Fluidsteuerventil gattungsgemäß einen Ventilgrundkörper und einen Betätigungshebel, der durch eine Hebellagerung beweglich am Ventilgrundkörper gehalten ist. Der Ventilgrundkörper weist ein Ventilgehäuse, einen darin beweglich angeordneten Ventilkörper und eine Lagerzapfenaufnahmestruktur auf. Die Hebellagerung weist eine in der Lagerzapfenaufnahmestruktur aufgenommene Lagerzapfenstruktur mit einem seitlich vom Betätigungshebel abstehenden Lagerzapfen oder zwei auf gegenüberliegenden Seiten vom Betätigungshebel abstehenden Lagerzapfen auf.

Fluidsteuerventile dieser und ähnlicher Art sind in verschiedenen Ausführungen bekannt und ermöglichen es dem Benutzer, dass er durch Betätigen des beweglichen Ventilkörpers über den Betätigungshebel eine und vorzugsweise mehrere zugeordnete Ventilfunktionen einstellen bzw. zwischen diesen umstellen kann. Im Bereich der Sanitärtechnik werden diese Fluidsteuerventile beispielsweise in Sanitärarmaturen dazu verwendet, als Absperrventil die Abgabe eines Fluids, typischerweise Wasser, wahlweise freizugeben oder abzusperren, als Mengenregulierventil die Menge an abgegebenem Fluid variabel, z.B. stufenlos, zu regulieren, als Mischventil das Mischungsverhältnis zweier zugeführter Fluide, wie kälteres Wasser und wärmeres Wasser, variabel, z.B. stufenlos, zu regulieren und/oder als Umstellventil das Fluid wahlweise an einem ersten oder einem zweiten Auslass abzugeben. Bevorzugt fungiert der Betätigungshebel als einziges Bedienelement, mit dem der Benutzer durch Bewegen des Betätigungshebels in unterschiedlichen Bewegungsrichtungen mehrere Ventilfunktionen steuern kann, z.B. das Mischungsverhältnis zweier zugeführter Fluide und die Menge an abgegebenem Mischfluid, weshalb diese Fluidsteuerventile auch kurz als Einhebelventile bzw. in speziellerer Ausführung als Einhebel-Mischventile bezeichnet werden. Breite Verwendung finden diese Fluidsteuerventile z.B. in sanitären Auslaufarmaturen an Waschtischen und Waschbecken in Sanitärräumen und Küchen, an Badewannen und in Duschräumen.

Die Offenlegungsschrift WO 2020/055736 A1 offenbart ein gattungsgemäßes Fluidsteuerventil, bei dem die Lagerzapfenstruktur zwei Lagerzapfen umfasst, die auf gegenüberliegenden Seiten eines zur Bildung eines Kugelgelenks kugelförmig verdickten Abschnitts des Betätigungshebels von diesem radial abstehen. Dabei bildet der jeweilige Lagerzapfen einen Schwenkachsstummel zur Verschwenkung des Betätigungshebels um eine Längsachse der Lagerzapfen. Die zugehörige Lagerzapfenaufnahmestruktur beinhaltet zwei innenseitig an einer Lagerhülse ausgebildete Axialnuten, die in Richtung einer Außenseite des dort als Kartuschenkörper gebildeten Ventilgrundkörpers geschlossen und in Richtung in das Innere des Ventilgrundkörpers offen ausmünden. Zur Montage muss daher zuerst der Betätigungshebel mit seinen Lagerzapfen in die Axialnuten der Lagerhülse eingefügt werden, bevor diese vormontierte Baueinheit mit den übrigen inneren Kartuschenkomponenten zusammengebracht und darauf dann das Ventilgehäuse aufgesetzt wird. Entsprechend ist eine Demontage des Betätigungshebels nicht ohne vorheriges Abnehmen des Ventilgehäuses und der Lagerhülse möglich.

Zusätzlich sind in der WO 2020/055736 A1 auch nicht gattungsgemäße Ventilvarianten offenbart, bei denen der Betätigungshebel mit einer Bohrung versehen ist, durch die ein Achsbolzen hindurchgeführt ist, der beidseits des Betätigungshebels in Öffnungen der Lagerhülse eingreift, wobei es sich insbesondere um einen Schraubbolzen handeln kann, mit dem der Reibungswiderstand für die Schwenkbetätigung des Betätigungshebels variabel eingestellt werden kann. Der Schraubbolzen ist durch das Ventilgehäuse verdeckt, so dass er montiert werden muss, bevor das Ventilgehäuse auf den übrigen Kartuschenkörper aufgesetzt wird. Ein ähnliches Fluidsteuerventil mit einem durch eine Bohrung des Betätigungshebels hindurchgeführten Achsbolzen ist in der Patentschrift EP 2 302 272 B1 offenbart.

Kugelgelenklagerungen sind ebenso wie Zylindergelenklagerungen in nicht gattungsgemäßen, hebelbetätigten Fluidsteuerventilen verschiedentlich bekannt, siehe beispielsweise die Offenlegungsschrift DE 10 2013 209 627 A1 sowie die Patentschriften EP 2 245 346 B1, EP 2 245 347 B1 und EP 3 149 368 B1.

Der Erfindung liegt als technisches Problem die Bereitstellung eines hebelbetätigten Fluidsteuerventils der eingangs genannten Art zugrunde, das gegenüber dem oben erwähnten Stand der Technik weitergehende Vorteile bietet, insbesondere im Hinblick auf einfache Bedienhebelmontage und/oder geringen Herstellungsaufwand.

Die Erfindung löst dieses Problem durch die Bereitstellung eines hebelbetätigten Fluidsteuerventils mit den Merkmalen des Anspruchs 1. Vorteilhafte Weiterbildungen der Erfindung sind in den Unteransprüchen angegeben, deren Wortlaut hiermit durch Verweis zum Bestandteil der Beschreibung gemacht wird. Dies schließt insbesondere auch alle Ausführungsformen der Erfindung ein, die sich aus den Merkmalskombinationen ergeben, die durch die Rückbezüge in den Unteransprüchen definiert sind.

Beim erfindungsgemäßen hebelbetätigten Fluidsteuerventil weist die Lagerzapfenaufnahme für den jeweiligen Lagerzapfen eine ihn über mehr als seinen halben Umfang umschließende, umfangsseitig offene Zapfenaufnahmeöffnung und einen Zapfeneinführschlitz auf, der zu einer Außenseite des Ventilgrundkörpers hin offen ist und in einer Einführrichtung unter Bildung einer Schnappverbindung radial in die Zapfenaufnahmeöffnung mündet. Durch diese Eigenschaften ergeben sich für das erfindungsgemäße Fluidsteuerventil signifikante Vorteile insbesondere im Hinblick auf eine einfache Montage des Bedienhebels am Ventilgrundkörper und einen vergleichsweise geringen Herstellungsaufwand.

So kann der Betätigungshebel mit seinem bzw. seinen Lagerzapfen von der Außenseite des Ventilgrundkörpers her in der Einführrichtung in den zugehörigen Zapfeneinführschlitz eingeführt und mittels der Schnappverbindung radial in die Zapfenaufnahmeöffnung eingefügt werden. Dabei kann der Ventilgrundkörper bereits fertig vormontiert sein, insbesondere ist es nicht erforderlich, den Betätigungshebel vor dem Anbringen des Ventilgehäuses am restlichen Ventilgrundkörper zu montieren. Es ist auch nicht erforderlich, den Betätigungshebel oder ein die Lagerzapfenstruktur enthaltendes Bauteil von hinten her am Ventilgrundkörper zu montieren, wobei hierfür diejenige Seite des Ventilgrundkörpers, von welcher der montierte Betätigungshebel absteht, als Vorderseite und dementsprechend die gegenüberliegende Seite als Rückseite bzw. hintere Seite des Ventilgrundkörpers bezeichnet sei.

In gleicher Weise ergibt sich für das erfindungsgemäße Fluidsteuerventil eine einfache Demontagemöglichkeit für den Betätigungshebel. Er braucht nicht über die Rückseite des Ventilgrundkörpers bzw. des Ventilgehäuses demontiert werden, sondern kann bei entsprechender Auslegung der Schnappverbindung als lösbare Verbindung nach außen, d. h. von der Vorderseite her, vom Ventilgrundkörper abgenommen werden. Dazu bedarf es keiner vorherigen Demontage des Ventilgehäuses.

Als weiterer Vorteil ist es durch die Schnappverbindung, mit welcher der jeweilige Lagerzapfen radial in die zugehörige Zapfenaufnahmeöffnung eingeschnappt wird, nicht erforderlich, den Lagerzapfen als Schraubbolzen auszubilden oder ihn mit einer engen Toleranz in Bezug zur Zapfenaufnahmeöffnung zwecks Bereitstellung einer genauen Passung bzw. einer Presspassung auszubilden.

Da die Lagerzapfenaufnahmestruktur den jeweiligen Lagerzapfen über mehr als seinen halben Umfang umschließt, sichert sie den Lagerzapfen gegen radiales Herausbewegen aus der Zapfenaufnahmeöffnung entgegen der Einführrichtung.

In einer Weiterbildung der Erfindung bildet die Hebellagerung eine Schwenklagerung für den Betätigungshebel, wobei der jeweilige Lagerzapfen einen Schwenkachsstummel der Schwenklagerung bildet. Somit kann die Hebellagerung, d.h. die Lagerung des Betätigungshebels mit seinem jeweiligen Lagerzapfen an der Lagerzapfenaufnahmestruktur des Ventilgrundkörpers, dazu dienen, dass der Betätigungshebel um den jeweiligen Lagerzapfen als Schwenk- bzw. Drehachse verschwenkt werden kann. Alternativ ist es auch möglich, dass der Betätigungshebel um eine andere Achse verschwenkt wird, z.B. um eine zur Lagerzapfenlängsachse parallel versetzte Schwenkachse, wobei der Lagerzapfen in diesem Fall beispielsweise als ein Kulissenzapfen fungieren kann, der in einer z.B. kreisbogenförmigen Kulissenbahn der Lagerzapfenaufnahmestruktur geführt ist.

In einer Weiterbildung der Erfindung ist der jeweilige Lagerzapfen einteilig mit dem Betätigungshebel ausgebildet. Diese Maßnahme trägt zu einem geringen Herstellungsaufwand bei, indem der oder die Lagerzapfen gleichzeitig und zusammen mit dem Betätigungshebel gefertigt werden können, beispielsweise als einteiliges Spritzgussbauteil oder im 3D-Druck. In alternativen Ausführungen ist der Betätigungshebel mit einer durchgehenden Bohrung versehen, in die ein Lagerbolzen eingefügt ist, der einseitig oder beidseitig gegenüber dem Betätigungshebel vorsteht und dadurch den einen oder die zwei Lagerzapfen bereitstellt. Weiter alternativ kann der Betätigungshebel mit einer oder zwei Sacklochbohrungen auf gegenüberliegenden Seiten versehen sein, in die ein jeweiliger Lagerbolzen zur Bereitstellung des betreffenden Lagerzapfens eingefügt ist.

In einer Weiterbildung der Erfindung ist der jeweilige Zapfeneinführschlitz von zwei elastisch aufweitbaren Schlitzbacken begrenzt. Dies stellt eine funktionell vorteilhafte Realisierung für den Zapfeneinführschlitz dar. Beim Einführen des zugeordneten Lagerzapfens des Betätigungshebels können sich die Schlitzbacken elastisch aufweiten, und sobald der Lagerzapfen in die zugehörige Zapfenaufnahmeöffnung gelangt, können die elastisch aufgeweiteten Schlitzbacken wieder in ihre Ausgangsposition zurückschnappen. In alternativen Ausführungen ist der jeweilige Zapfeneinführschlitz in anderer Weise realisiert, z.B. unter Verwendung nur eines einzigen elastisch nachgiebigen Rast-/Schnappelements, das der Einführbewegung des Lagerzapfens elastisch nachgeben kann und wieder elastisch in seine Ausgangsposition zurückkehrt, sobald der Lagerzapfen die Zapfenaufnahmeöffnung erreicht hat.

In einer Weiterbildung der Erfindung verjüngt sich der jeweilige Zapfeneinführschlitz in der Einführrichtung konisch. Diese Maßnahme kann die Montage des Betätigungshebels weiter erleichtern. So kann der Zapfeneinführschlitz in seinem Einlassbereich eine Weite besitzen, die mindestens so groß oder etwas größer ist als der Durchmesser des Lagerzapfens, und kann sich dann zur Zapfenaufnahmeöffnung hin auf eine demgegenüber kleinere Weite verengen. Dadurch kann der Lagerzapfen in den Zapfeneinführschlitz eingeführt werden, ohne dass dieser zuvor aufgeweitet werden muss, und der Lagerzapfen kann durch seine Einführbewegung den Zapfeneinführschlitz zum Bewirken der Schnappverbindung selbsttätig aufweiten, ohne dass dies der Benutzer in anderer Weise veranlassen muss. In alternativen Ausführungen kann der Zapfeneinführschlitz andersartig geformt sein, z.B. als Schlitz mit längs der Einführrichtung konstanter Weite, wenn dies für entsprechende Anwendungen ausreichend bzw. günstig ist.

In einer Ausgestaltung der Erfindung verjüngt sich der jeweilige Zapfeneinführschlitz in Einführrichtung von einer außenseitigen Weite, die mindestens so groß wie ein Durchmesser des zugeordneten Lagerzapfens ist, auf eine innenseitige Weite, die im Bereich von etwa 50 % bis etwa 90 %, insbesondere zwischen etwa 60 % und 80 %, des Lagerzapfendurchmessers liegt. Diese Bemaßung des Zapfeneinführschlitzes erweist sich im Hinblick auf das selbsttätige Aufweiten des Zapfeneinführschlitzes durch den Lagerzapfen und im Hinblick auf eine zuverlässige Funktion der Schnappverbindung und ein zuverlässiges Halten des Lagerzapfens in der Zapfenaufnahmeöffnung als vorteilhaft. In alternativen Ausführungen kann der Zapfeneinführschlitz anders bemaßt sein, z.B. mit einer innenseitigen Weite zwischen 90 % und 100 % des Lagerzapfendurchmessers.

In einer Weiterbildung der Erfindung ist die jeweilige Zapfenaufnahmeöffnung über einen Umfangswinkel zwischen etwa 50° und etwa 90° offen. Diese Gestaltung der umfangsseitig offenen Zapfenaufnahmeöffnung erweist sich im Hinblick auf eine zuverlässige Funktion der Schnappverbindung und ein zuverlässiges Halten des Lagerzapfens in der Zapfenaufnahmeöffnung als vorteilhaft. Mit größerem offenem Umfangswinkel der Zapfenaufnahmeöffnung können die zum Einschnappen des Lagerzapfens in die Zapfenaufnahmeöffnung benötigten Kräfte geringer gehalten werden, mit kleinerem Umfangswinkel vergrößert sich die gegen radiales Herausgelangen sichernde Umschließung des eingeschnappten Lagerzapfens durch die Lagerzapfenaufnahmestruktur. In alternativen Ausführungen kann auch ein offener Umfangswinkel der Zapfenaufnahmeöffnung von etwas weniger als 50° oder etwas mehr als 90° gewählt werden, wenn dies für entsprechende Anwendungen ausreichend bzw. günstig ist.

In einer Weiterbildung der Erfindung ist die Lagerzapfenaufnahmestruktur an einer Lagerhülse des Ventilgrundkörpers ausgebildet, die im Ventilgehäuse angeordnet ist. In diesem Fall ist die Lagerzapfenaufnahmestruktur Bestandteil der Lagerhülse, die eine vom Ventilgehäuse verschiedene und in diesem angeordnete Komponente des Ventilgrundkörpers bildet. Dies ermöglicht entsprechende Gestaltungsfreiheiten für das Ventilgehäuse unabhängig von der Lagerzapfenaufnahmestruktur. In alternativen Ausführungen kann die Lagerzapfenaufnahmestruktur direkt am Ventilgehäuse oder an einem mit diesem fest verbundenen Bauteil des Ventilgrundkörpers ausgebildet sein.

In einer Ausgestaltung der Erfindung ist die Lagerhülse als separates Bauteil gefertigt und in das Ventilgehäuse eingefügt und in ihrer Einbaulage gegen Herausbewegen aus dem Ventilgehäuse gesichert gehalten. Diese Maßnahme bietet montagetechnische und funktionelle Vorteile. Die Fertigung der Lagerhülse als separates Bauteil, d.h. als ein von den übrigen Komponenten des Ventilgrundkörpers separat bereitgestelltes Bauteil, ermöglicht beispielsweise eine Vormontage des Betätigungshebels an der Lagerhülse vor dem Einfügen dieser vormontierten Baueinheit in das Ventilgehäuse. Es ist auch möglich, zunächst die Lagerhülse im Ventilgehäuse zu montieren und dann den Betätigungshebel an der Lagerhülse zu montieren. In alternativen Ausführungen kann die Lagerzapfenaufnahmestruktur bzw. die Lagerhülse integraler Bestandteil einer anderen Komponente des Ventilgrundkörpers sein.

In einer anderen Ausgestaltung der Erfindung ist die Lagerhülse um eine zu einer Längsachse des Ventilgrundkörpers parallele und zu einer Längsachse des jeweiligen Lagerzapfens senkrechte Drehachse drehbeweglich, insbesondere begrenzt drehbeweglich, im Ventilgehäuse aufgenommen. Durch diese Ausführung wird für das Fluidsteuerventil ein weiterer Schwenkbewegungs- bzw. Drehbewegungs-Freiheitsgrad zum Verschwenken bzw. Verdrehen der Lagerhülse und damit des an ihr gehaltenen Betätigungshebels bereitgestellt. So lassen sich mit einem Verschwenken des Betätigungshebels um eine zum Lagerzapfen parallele Schwenkachse ein erster Ventilparameter und mit dem Verschwenken des Betätigungshebels samt Lagerhülse um die dazu senkrechte Drehachse ein zweiter Ventilparameter steuern. Dies kann beispielsweise zum Steuern des Mischungsverhältnisses und der Menge an abgegebenem Fluid bei Ausführung des Fluidsteuerventils als entsprechendes Mischventil genutzt werden. In alternativen Ausführungen kann die Lagerhülse unbeweglich im Ventilgehäuse aufgenommen sein.

In noch einer anderen Ausgestaltung der Erfindung sind der jeweilige Zapfeneinführschlitz und die zugehörige Zapfenaufnahmeöffnung an einer außenseitigen Stirnseite der Lagerhülse ausgebildet. Dies ist funktionell und im Hinblick auf geringen Herstellungsaufwand von Vorteil. Der Zapfeneinführschlitz und die Zapfenaufnahmeöffnung lassen sich relativ einfach an der Stirnseite der Lagerhülse ausbilden, und ihre Lage an der außenseitigen Lagerhülsen-Stirnseite ermöglicht ein einfaches Einfügen des Lagerzapfens des Betätigungshebels in die Zapfenaufnahmeöffnung von dieser Stirnseite bzw. Außenseite der Lagerhülse her. Dabei bezeichnet die außenseitige Stirnseite diejenige Stirnseite der Lagerhülse, die bei im Ventilgehäuse montierter Lagerhülse in Richtung Außenseite des Ventilgrundkörpers zeigt. Die außenseitige Stirnseitenlage von Zapfeneinführschlitz und Zapfenaufnahmeöffnung ermöglicht zudem ein problemloses Einfügen des Lagerzapfens des Betätigungshebels in die Lagerzapfenaufnahmestruktur von der Außenseite des Ventilgrundkörpers her. In alternativen Ausführungen kann der Zapfeneinführschlitz samt Zapfenaufnahmeöffnung an anderer Stelle der Lagerhülse ausgebildet sein, z.B. umfangsseitig.

In noch einer anderen Ausgestaltung der Erfindung ist die Lagerhülse durch einen am Ventilgehäuse angebrachten Fixierring in ihrer Einbaulage gegen Herausbewegen aus dem Ventilgehäuse gesichert gehalten. Damit wird die Lagerhülse in einfacher Weise sicher im Ventilgehäuse gehalten. Zudem ist eine einfache Demontage der Lagerhülse vom übrigen Ventilgrundkörper möglich. Hierzu braucht lediglich zuvor der Fixierring abgenommen werden, der zu diesem Zweck vorzugsweise lösbar am Ventilgehäuse angebracht ist. In alternativen Ausführungen ist die Lagerhülse in anderer Weise gegen Herausbewegen aus dem Ventilgehäuse gesichert gehalten, z.B. durch Verrasten an bzw. mit einer anderen Komponente des Ventilgrundkörpers.

In einer weitergehenden Ausgestaltung der Erfindung sichert der Fixierring die Schlitzbacken gegen Aufweiten. Damit erfüllt der Fixierring in vorteilhafter Weise zusätzlich zum Sichern der Lagerhülse im Ventilgehäuse diese weitere Funktion, mit der er den Betätigungshebel vor einem unbeabsichtigten Herausgelangen aus der Lagerhülse sichert. In alternativen Ausführungen ist der Fixierring nicht für diese Zusatzfunktion ausgelegt, und die Schlitzbacken werden in anderer Weise gegen Aufweiten gesichert oder bleiben insoweit ungesichert, wenn dies für entsprechende Anwendungen ausreicht, z.B. weil entsprechend große aufweitende Kräfte im Gebrauch des Ventils nicht zu erwarten sind.

In einer Weiterbildung der Erfindung ist der Ventilgrundkörper als ein Ventilkartuschenkörper ausgebildet. Dies stellt eine vorteilhafte, an sich bekannte Ausführung für den Ventilgrundkörper dar, die sich für zahlreiche Anwendungen eignet, bei denen ein solches Ventil in Form der Ventilkartusche am gedachten Einsatzort eingebaut bzw. montiert wird. In alternativen Ausführungen ist der Ventilgrundkörper in einer anderen herkömmlichen Weise realisiert.

Eine vorteilhafte Ausführungsform der Erfindung ist in den Zeichnungen dargestellt. Diese und weitere Ausführungsformen der Erfindung werden nachfolgend näher erläutert. Dabei zeigen:

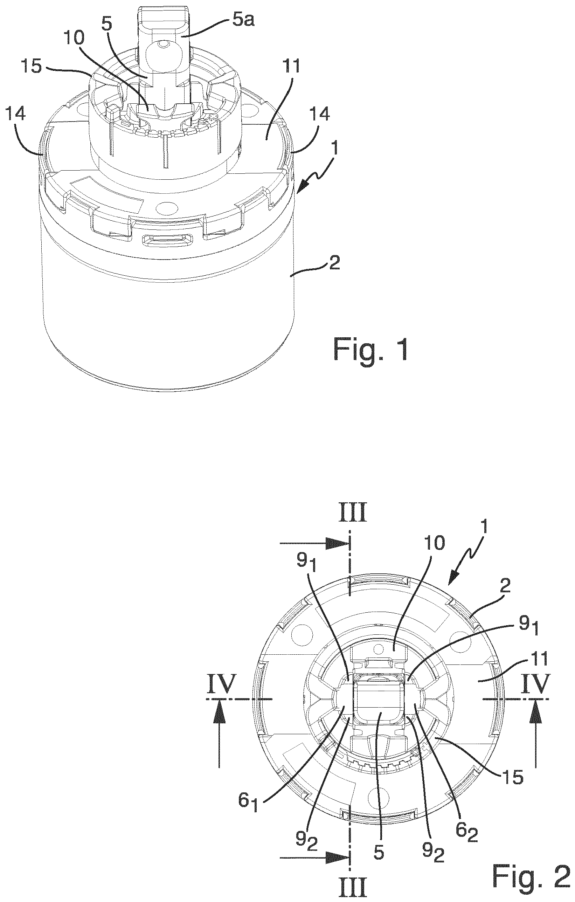

- Fig. 1: eine perspektive Seitenansicht eines hebelbetätigten Fluidsteuerventils in einer Kartuschenausführung,
- Fig. 2: eine Stirnseitenansicht auf eine Oberseite des Fluidsteuerventils,
- Fig. 3: eine Schnittansicht längs einer Linie III-III in Fig. 2,
- Fig. 4: eine Schnittansicht s einer Linie IV-IV in Fig. 2,
- Fig. 5: eine Perspektivansicht eines Betätigungshebels und einer Lagerhülse des Fluidsteuerventils vor Einfügen des Betätigungshebels in die Lagerhülse,
- Fig. 6: eine Seitenansicht des Betätigungshebels und der Lagerhülse vor Einfügen des Betätigungshebels in die Lagerhülse,
- Fig. 7: die Perspektivansicht von Fig. 5 nach Einfügen des Betätigungshebels in die Lagerhülse und
- Fig. 8: die Seitenansicht von Fig. 6 nach Einfügen des Betätigungshebels in die Lagerhülse.

Wie in den Figuren anhand eines exemplarischen Ausführungsbeispiels veranschaulicht, umfasst das erfindungsgemäße hebelbetätigte Fluidsteuerventil einen Ventilgrundkörper 1 und einen Betätigungshebel 5, der durch eine Hebellagerung beweglich am Ventilgrundkörper 1 gehalten ist. Der Ventilgrundkörper 1 umfasst ein Ventilgehäuse 2, einen darin beweglich angeordneten Ventilkörper 3 und eine Lagerzapfenaufnahmestruktur 4. Im gezeigten Beispiel ist der Ventilgrundkörper 1 als Kartuschenkörper mit zylindrischer Form des Ventilgehäuses 2 realisiert. Der Betätigungshebel 5 ist mit dem Ventilkörper 3 bewegungsgekoppelt. Dazu ist der Betätigungshebel 5 in an sich bekannter Art an einem Ende mit einem Koppelzapfen 12 versehen, durch den er mit dem beweglichen Ventilkörper 3 gekoppelt werden kann.

Der Benutzer kann folglich das Ventil durch Bewegen des Ventilkörpers 3 über den Betätigungshebel 5 steuern. Dazu kann an einem freien, äußeren Endbereich 5a des Betätigungshebels 5 in an sich bekannter und daher hier nicht gezeigter Weise ein Griffbedienelement als Bedienschnittstelle des Ventils für den Benutzer angebracht werden, z.B. ein vom Betätigungshebel 5 radial, d.h. in Querrichtung, abstehender Bediengriffhebel.

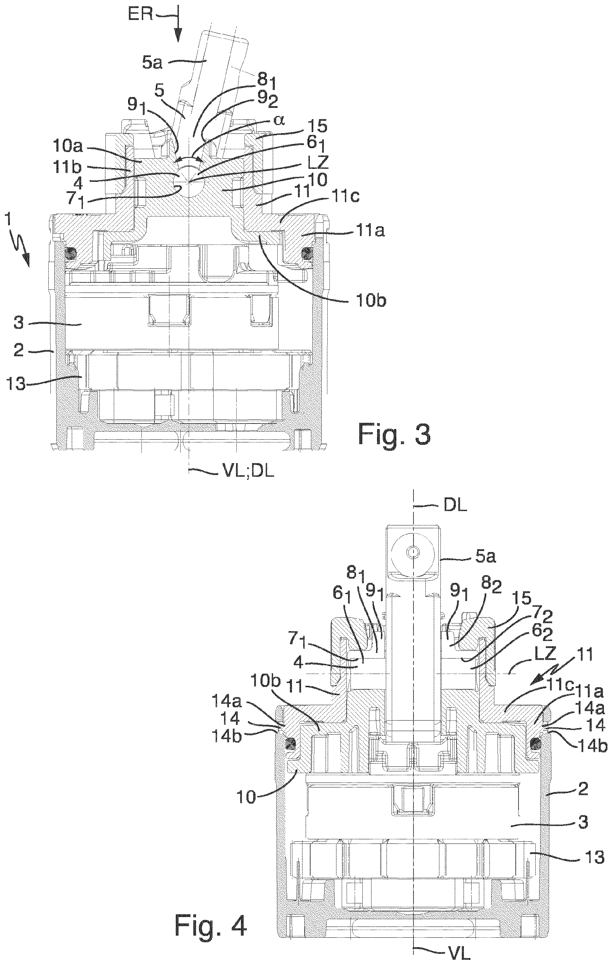

Im gezeigten Beispiel ist der Ventilkörper 3 eine Ventilscheibe, die planparallel auf einer im Ventilgehäuse 2 unbeweglich angeordneten Ventilscheibe 13 gegenüber dieser in Querrichtung, d.h. senkrecht zu einer Längsachse VL des Ventilgrundkörpers 1 und der Ventilscheiben 3, 13, relativbeweglich aufliegt, wie in den Fig. 3 und 4 zu erkennen. Die beiden Ventilscheiben 3, 13 sind in an sich bekannter und daher hier nicht gezeigter Weise mit Durchlassöffnungsstrukturen versehen, die je nach Stellung der beweglichen Ventilscheibe, d.h. des Ventilkörpers 3, einen die Weiterleitung von Fluid gestattenden Überlapp besitzen oder von einem angrenzenden Bereich der anderen Ventilscheibe abgesperrt werden, so dass das Ventil die jeweils zugedachte Ventilfunktion erfüllt.

Die Hebellagerung des Betätigungshebels 5 am Ventilgrundkörper 1 umfasst eine in der Lagerzapfenaufnahmestruktur 4 aufgenommene Lagerzapfenstruktur mit einem seitlich vom Betätigungshebel 5 abstehenden Lagerzapfen oder zwei auf gegenüberliegenden Seiten vom Betätigungshebel 5 abstehenden Lagerzapfen. Im gezeigten Beispiel sind zwei Lagerzapfen 6₁, 6₂ vorgesehen, in alternativen Ausführungen ist nur ein Lagerzapfen, z.B. der Lagerzapfen 6, oder der Lagerzapfen 6₂, vorgesehen.

Die Lagerzapfenaufnahmestruktur 4 beinhaltet für den jeweiligen Lagerzapfen 6₁, 6₂ eine ihn über mehr als seinen halben Umfang umschließende, umfangsseitig offene Zapfenaufnahmeöffnung 7₁, 7₂ sowie einen Zapfeneinführschlitz 8₁, 8₂. Der jeweilige Zapfeneinführschlitz 8₁, 8₂ ist zu einer Außenseite des Ventilgrundkörpers 1 hin offen, im gezeigten Beispiel zu einer in den Fig. 3 und 4 oberen Seite des Ventilgrundkörpers 1, vorliegend auch als Vorderseite oder Oberseite des Ventilgrundkörpers 1 bezeichnet. Der jeweilige Zapfeneinführschlitz 8₁, 8₂ mündet in einer Einführrichtung ER unter Bildung einer Schnappverbindung radial in die zugeordnete Zapfenaufnahmeöffnung 7₁, 7₂. Die Einführrichtung ER definiert hierbei diejenige Richtung, in welcher der Betätigungshebel 5 bei seiner Montage mit seinem einen oder seinen zwei Lagerzapfen 6₁, 6₂ in den betreffenden Zapfeneinführschlitz 8₁, 8₂ eingeführt werden kann, bis der jeweilige Lagerzapfen 6₁, 6₂ in seine zugehörige Zapfenaufnahmeöffnung 7₁, 7₂ einschnappt. Der jeweilige Zapfeneinführschlitz 8₁, 8₂ mündet folglich quer zu einer Längsrichtung der zugehörigen Zapfenaufnahmeöffnung 7₁, 7₂.

In vorteilhaften Ausführungsformen ist die Hebellagerung, wie im gezeigten Beispiel, als Schwenklagerung für den Betätigungshebel 5 ausgebildet. Dabei bildet der jeweilige Lagerzapfen 6₁, 6₂ einen Schwenkachsstummel dieser Schwenklagerung. Der Betätigungshebel 5 kann in diesem Fall um eine Längsachse LZ des jeweiligen Lagerzapfens 6₁, 6₂ als Schwenkachse verschwenkt werden.

In vorteilhaften Ausführungen ist der jeweilige Lagerzapfen 61, 62, wie im gezeigten Beispiel, einteilig mit dem Betätigungshebel 5 ausgebildet. Der oder die Lagerzapfen 6₁, 6₂ brauchen daher nicht als separate Bauteile vorgefertigt werden, sondern können als ein Teil mit dem Betätigungshebel 5 gefertigt werden, z.B. als ein in Spritzgusstechnik oder 3D-Drucktechnik hergestelltes Bauteil.

In vorteilhaften Ausführungsformen ist der jeweilige Zapfeneinführschlitz 8₁, 8₂, wie im gezeigten Beispiel, von zwei elastisch aufweitbaren Schlitzbacken 9₁, 9₂ begrenzt. Die beiden Schlitzbacken 9₁, 9₂ definieren somit zwischen sich den zugehörigen Zapfeneinführschlitz 8₁, 8₂.

In entsprechenden Ausführungen verjüngt sich der jeweilige Zapfeneinführschlitz 8₁, 8₂ in der Einführrichtung ER konisch, wie dies beim gezeigten Beispiel der Fall ist. Spezieller verjüngt sich in entsprechenden Realisierungen der jeweilige Zapfeneinführschlitz 8₁, 8₂ in der Einführrichtung ER von einer außenseitigen Weite Wa, d.h. der Weite Wa am Eintritt in den Zapfeneinführschlitz 8₁, 8₂, auf eine innenseitige Weite Wi, d. h. der Weite Wi am Übergang zur Zapfenaufnahmeöffnung 7₁, 7₂, wobei die außenseitige Weite Wa mindestens so groß wie ein Durchmesser DZ des zugeordneten Lagerzapfens 6₁, 6₂ ist und die innenseitige Weite Wi im Bereich von etwa 50 % bis etwa 90 % des Lagerzapfendurchmessers DZ liegt. Vorzugsweise liegt die innenseitige Weite Wi, wie im gezeigten Beispiel, zwischen etwa 60 % und 80 % des Lagerzapfendurchmessers DZ. Durch geeignete Wahl der innenseitigen Weite Wi des jeweiligen Zapfeneinführschlitzes 8₁, 8₂ wird zum einen eine optimale Funktion der Schnappverbindung und zum anderen ein sicheres Halten des jeweiligen Lagerzapfens 6₁, 6₂ in der zugehörigen Zapfenaufnahmeöffnung 7₁, 7₂ gewährleistet.

In entsprechenden Ausführungen ist die jeweilige Zapfenaufnahmeöffnung 7₁, 7₂ über einen Umfangswinkel α zwischen etwa 50° und etwa 90° offen. Im gezeigten Beispiel beträgt der offene Umfangswinkel α der jeweiligen Zapfenaufnahmeöffnung 7₁, 7₂ etwa 65° bis 70°.

In vorteilhaften Ausführungsformen ist die Lagerzapfenaufnahmestruktur 4, wie im gezeigten Beispiel, an einer Lagerhülse 10 des Ventilgrundkörpers 1 ausgebildet, die im Ventilgehäuse 2 angeordnet ist.

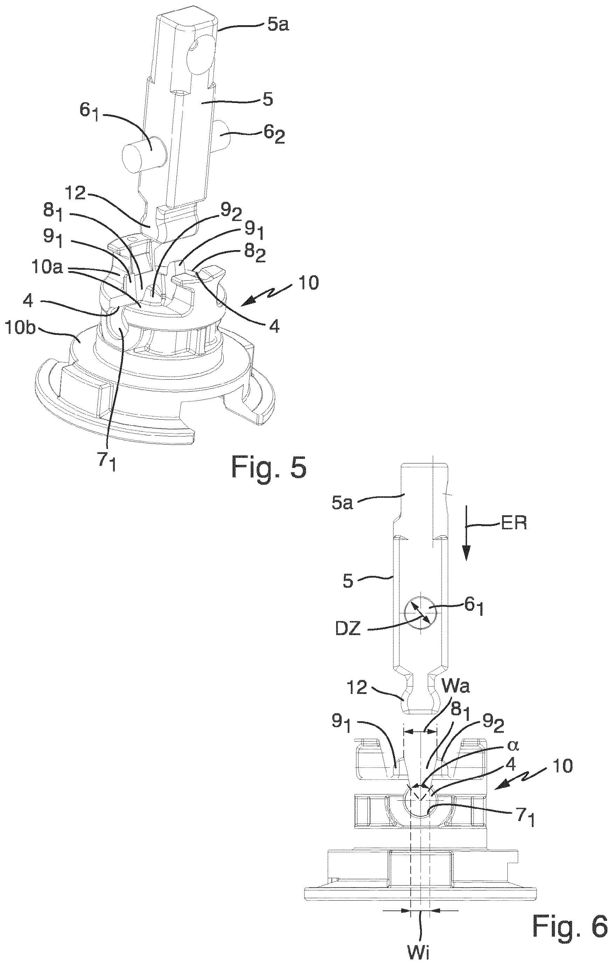

In entsprechenden Realisierungen ist die Lagerhülse 10, wie im gezeigten Beispiel, als separates Bauteil gefertigt und in das Ventilgehäuse 2 eingefügt, wobei sie in ihrer Einbaulage gegen Herausbewegen aus dem Ventilgehäuse 2 gesichert gehalten ist. Aus den Fig. 5 und 6 ist die Gestalt der im gezeigten Beispiel verwendeten Lagerhülse 10 zu erkennen.

In entsprechenden Ausführungen ist die Lagerhülse 10, wie im gezeigten Beispiel, um eine zur Längsachse VL des Ventilgrundkörpers 1 parallele und zur Längsachse LZ des jeweiligen Lagerzapfens 6₁, 6₂ senkrechte Drehachse DL drehbeweglich, insbesondere begrenzt drehbeweglich, im Ventilgehäuse 2 aufgenommen. Im gezeigten Beispiel fällt diese Drehachse DL mit der Längsachse VL des Ventilgrundkörpers 1 zusammen, wobei die Längsachse VL die Längsmittenachse des Ventilgrundkörpers 1 darstellt.

In entsprechenden Realisierungen sind der jeweilige Zapfeneinführschlitz 8₁, 8₂ und die zugehörige Zapfenaufnahmeöffnung 7₁, 7₂, wie im gezeigten Beispiel, an einer außenseitigen Stirnseite der Lagerhülse 10 ausgebildet, d.h. an derjenigen Stirnseite der Lagerhülse 10, die in Richtung Außenseite bzw. Vorderseite oder Oberseite des Ventilgrundkörpers 1 zeigt, wenn die Lagerhülse 10 im Ventilgehäuse 2 montiert ist.

In vorteilhaften Ausführungsformen ist die Lagerhülse 10 durch einen am Ventilgehäuse 2 vorzugsweise lösbar angebrachten Fixierring 11 in ihrer Einbaulage gegen Herausbewegen aus dem Ventilgehäuse 2 gesichert gehalten. Dazu legt sich im gezeigten Beispiel der Fixierring 11 mit einem Ringflanschabschnitt 11c axial gegen einen korrespondierenden Ringflansch 10b der Lagerhülse 10 an. Im gezeigten Beispiel ist der Fixierring 11 durch eine Rastverbindung 14 vorzugsweise lösbar am Ventilgehäuse 2 gehalten. Dazu schnappen bzw. rasten eine oder vorzugsweise mehrere Rastnasen 14a, die vom Fixierring 11 radial abstehen, in zugeordnete Rastöffnungen 14b des Ventilgehäuses 2 ein, wenn der Fixierring 11 von der Vorderseite bzw. Oberseite des Ventilgrundkörpers 1 her mit einem hülsenförmigen Halteabschnitt 11a, an dem sich die Rastnasen 14a befinden, in das Ventilgehäuse 2 eingeschoben wird.

In vorteilhaften Realisierungen sichert der Fixierring 11, wie im gezeigten Beispiel, die Schlitzbacken 9₁, 9₂ der Lagerzapfenaufnahmestruktur 4 gegen Aufweiten. Dazu weist der Fixierring 11 einen Sicherungshülsenabschnitt 11b auf, der die in diesem Beispiel an der Lagerhülse 10 ausgebildeten Schlitzbacken 9₁, 9₂ daran hindert, sich radial nach außen zu bewegen. Dazu liegt ein die Schlitzbacken 9₁, 9₂ beinhaltender Abschnitt 10a der Lagerhülse 10 radial nach außen gegen die Innenseite des Sicherungshülsenabschnitts 11b des Fixierrings 11 an, wie in Fig. 3 zu erkennen.

In entsprechenden Realisierungen ist die Lagerhülse 10, wie erwähnt, in ihrer Drehbewegung begrenzt im Ventilgehäuse 2 aufgenommen. Die Begrenzung wird im gezeigten Beispiel durch einen Begrenzungsring 15 bereitgestellt, der am Fixierring 11 gehalten ist und gegen den die Lagerhülse mit ihrem die Schlitzbacken 9₁, 9₂ aufweisenden Abschnitt 10a drehbewegungsbegrenzend zur Anlage kommen kann. Vorzugsweise kann der Begrenzungsring 15 in an sich bekannter Weise in mehreren verschiedenen Drehstellungen auf den Fixierring 11 aufgesetzt werden, wodurch sich die Drehbewegung der Lagerhülse 10 und mit ihr des Betätigungshebels 5 um die Drehachse DL auf entsprechend unterschiedliche Drehwinkelbereiche begrenzen lässt. Dies kann beispielsweise bei einer Ausführung des Ventils als Mischventil zum Mischen eines kalten und eines heißen Fluids zur Temperaturbegrenzung genutzt werden.

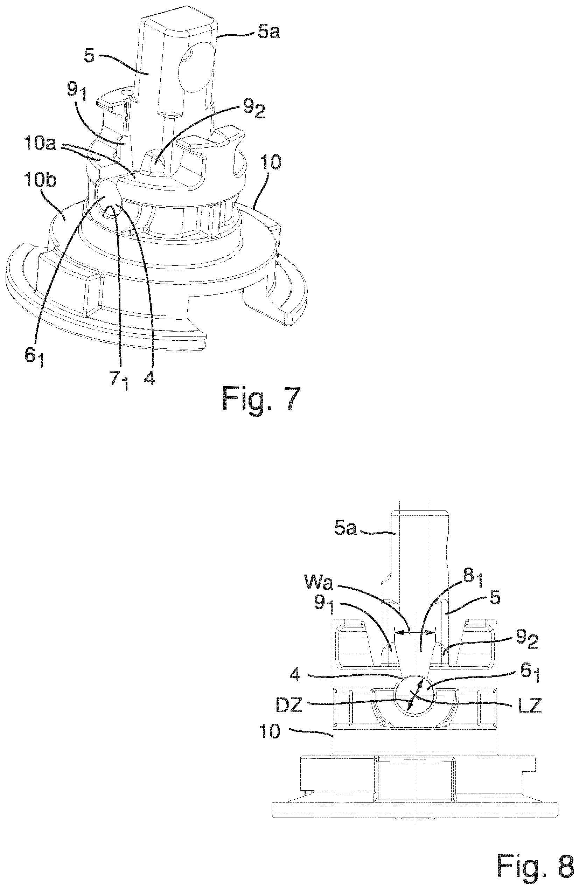

Wie die obigen Erläuterungen zum gezeigten Ausführungsbeispiel und zu weiteren Ausführungsmöglichkeiten deutlich machen, stellt die Erfindung ein hebelbetätigtes Fluidsteuerventil zur Verfügung, das gegenüber herkömmlichen Ventilen dieser Art Vorteile insbesondere hinsichtlich der Montage des Betätigungshebels 5 und hinsichtlich Herstellungsaufwand bietet. Beim erfindungsgemäßen Ventil kann der Betätigungshebel 5 sehr einfach mit seinem einen Lagerzapfen 6₁ oder 6₂ oder seinen beiden Lagerzapfen 6₁, 6₂ in der Lagerzapfenaufnahmestruktur 4 des Ventilgrundkörpers 1 durch Einschnappen montiert werden. Die Lagerzapfenaufnahmestruktur 4 kann z.B. durch die Lagerhülse 10 bereitgestellt sein, die ihrerseits in einfacher Weise im Ventilgehäuse 2 montiert werden kann, wobei der Betätigungshebel 5 vor oder nach dem Montieren der Lagerhülse 10 im Ventilgehäuse 2 an der Lagerhülse 10 schwenkbeweglich festgelegt werden kann. Die Fig. 5 und 6 veranschaulichen den Betätigungshebel 5 und die Lagerhülse 10 vor dem Einfügen bzw. Einschnappen des Betätigungshebel 5 in die Lagerhülse 10, die Fig. 7 und 8 zeigen die beiden Ventilkomponenten nach der Montage des Betätigungshebel 5 an der Lagerhülse 10. Diese vormontierte Baueinheit kann dann von oben bzw. von vorn auf den übrigen Ventilkörperaufbau im Ventilgehäuse 2 aufgesetzt und mit dem Fixierring 11 gehalten werden. Der Betätigungshebel 5 kann auf Wunsch zusammen mit dem oder den Lagerzapfen 6₁, 6₂ als einteiliges Bauteil gefertigt werden, z.B. als Spritzgussteil oder 3D-Druckteil.

Das erfindungsgemäße Fluidsteuerventil ist insbesondere als sanitäres Einhebelventil für alle diesbezüglich bekannten Anwendungen einsetzbar, z.B. als reines Mischventil, als reines Absperrventil, als reines Umstellventil oder als ein Ventil, bei dem mehrere dieser Ventilfunktionen kombiniert sind. Dabei ist das erfindungsgemäße Fluidsteuerventil insbesondere in sanitären Wasserauslaufarmaturen an Badezimmer-Waschtischen, an anderen Waschbecken, wie Küchenwaschbecken, in Duschräumen und an Badewannen verwendbar. Es versteht sich, dass das erfindungsgemäße Fluidsteuerventil auch für nicht-sanitäre Anwendungen überall dort verwendbar ist, wo Bedarf an einer benutzerbetätigten Steuerung der Abgabe eines Fluids durch ein Ventil besteht.

## Patentansprüche

1. Hebelbetätigtes Fluidsteuerventil, insbesondere sanitäres Einhebelventil, mit
- einem Ventilgrundkörper (1) mit einem Ventilgehäuse (2), einem darin beweglich angeordneten Ventilkörper (3) und einer Lagerzapfenaufnahmestruktur (4) und
- einem Betätigungshebel (5), der durch eine Hebellagerung beweglich am Ventilgrundkörper (1) gehalten und mit dem Ventilkörper (3) bewegungsgekoppelt ist,
- wobei die Hebellagerung eine in der Lagerzapfenaufnahmestruktur (4) aufgenommene Lagerzapfenstruktur mit einem seitlich vom Betätigungshebel (5) abstehenden Lagerzapfen (6₁) oder zwei auf gegenüberliegenden Seiten vom Betätigungshebel (5) abstehenden Lagerzapfen (6₁, 6₂) umfasst,
**dadurch gekennzeichnet, dass**
- die Lagerzapfenaufnahmestruktur (4) für den jeweiligen Lagerzapfen (6₁, 6₂) eine ihn über mehr als seinen halben Umfang umschließende, umfangsseitig offene Zapfenaufnahmeöffnung (7₁, 7₂) und einen Zapfeneinführschlitz (8₁, 8₂) aufweist, der zu einer Außenseite des Ventilgrundkörpers (1) hin offen ist und in einer Einführrichtung (ER) unter Bildung einer Schnappverbindung radial in die Zapfenaufnahmeöffnung (7₁, 7₂) mündet.

2. Hebelbetätigtes Fluidsteuerventil nach Anspruch 1, weiter **dadurch gekennzeichnet, dass** die Hebellagerung eine Schwenklagerung für den Betätigungshebel (5) bildet, wobei der jeweilige Lagerzapfen (6₁, 6₂) einen Schwenkachsstummel der Schwenklagerung bildet.

3. Hebelbetätigtes Fluidsteuerventil nach Anspruch 1 oder 2, weiter **dadurch gekennzeichnet, dass** der jeweilige Lagerzapfen (6₁, 6₂) einteilig mit dem Betätigungshebel (5) ausgebildet ist.

4. Hebelbetätigtes Fluidsteuerventil nach einem der Ansprüche 1 bis 3, weiter **dadurch gekennzeichnet, dass** der jeweilige Zapfeneinführschlitz (8₁, 8₂) von zwei elastisch aufweitbaren Schlitzbacken (9₁, 9₂) begrenzt ist.

5. Hebelbetätigtes Fluidsteuerventil nach einem der Ansprüche 1 bis 4, weiter **dadurch gekennzeichnet, dass** sich der jeweilige Zapfeneinführschlitz (8₁, 8₂) in der Einführrichtung (ER) konisch verjüngt.

6. Hebelbetätigtes Fluidsteuerventil nach Anspruch 5, weiter **dadurch gekennzeichnet, dass** sich der jeweilige Zapfeneinführschlitz (8₁, 8₂) in der Einführrichtung (ER) von einer außenseitigen Weite (Wa), die mindestens so groß wie ein Durchmesser (DZ) des zugeordneten Lagerzapfens (6₁, 6₂) ist, auf eine innenseitige Weite (Wi) verjüngt, die im Bereich von etwa 50 % bis etwa 90 %, insbesondere zwischen etwa 60 % und 80 %, des Lagerzapfendurchmessers (DZ) liegt.

7. Hebelbetätigtes Fluidsteuerventil nach einem der Ansprüche 1 bis 6, weiter **dadurch gekennzeichnet, dass** die jeweilige Zapfenaufnahmeöffnung (7₁, 7₂) über einen Umfangswinkel (α) zwischen etwa 50° und etwa 90° offen ist.

8. Hebelbetätigtes Fluidsteuerventil nach einem der Ansprüche 1 bis 7, weiter **dadurch gekennzeichnet, dass** die Lagerzapfenaufnahmestruktur (4) an einer Lagerhülse (10) des Ventilgrundkörpers (1) ausgebildet ist, die im Ventilgehäuse (2) angeordnet ist.

9. Hebelbetätigtes Fluidsteuerventil nach Anspruch 8, weiter **dadurch gekennzeichnet, dass** die Lagerhülse (10) als separates Bauteil gefertigt und in das Ventilgehäuse (2) eingefügt und in ihrer Einbaulage gegen Herausbewegen aus dem Ventilgehäuse (2) gesichert gehalten ist.

10. Hebelbetätigtes Fluidsteuerventil nach Anspruch 8 oder 9, weiter **dadurch gekennzeichnet, dass** die Lagerhülse (10) um eine zu einer Längsachse (VL) des Ventilgrundkörpers (1) parallele und zu einer Längsachse (LZ) des jeweiligen Lagerzapfens (6₁, 6₂) senkrechte Drehachse (DL) drehbeweglich, insbesondere begrenzt drehbeweglich, im Ventilgehäuse (2) aufgenommen ist.

11. Hebelbetätigtes Fluidsteuerventil nach einem der Ansprüche 8 bis 10, weiter **dadurch gekennzeichnet, dass** der jeweilige Zapfeneinführschlitz (8₁, 8₂) und die zugehörige Zapfenaufnahmeöffnung (7₁, 7₂) an einer außenseitigen Stirnseite der Lagerhülse (10) ausgebildet sind.

12. Hebelbetätigtes Fluidsteuerventil nach einem der Ansprüche 8 bis 11, weiter **dadurch gekennzeichnet, dass** die Lagerhülse (10) durch einen am Ventilgehäuse (2) angebrachten Fixierring (11) in ihrer Einbaulage gegen Herausbewegen aus dem Ventilgehäuse (2) gesichert gehalten ist.

13. Hebelbetätigtes Fluidsteuerventil nach Anspruch 12, weiter **dadurch gekennzeichnet, dass** der Fixierring (11) die Schlitzbacken (9₁, 9₂) gegen Aufweiten sichert.

14. Hebelbetätigtes Fluidsteuerventil nach einem der Ansprüche 1 bis 13, weiter **dadurch gekennzeichnet, dass** der Ventilgrundkörper (1) als ein Ventilkartuschenkörper ausgebildet ist.
